# EUROPEAN PATENT APPLICATION

(11) **EP 2 591 749 A2**
(43) Date of publication of application: **15.05.2013**
(21) Application number: 12192275.1
(22) Date of filing: 12.11.2012
(51) Int. Cl.: A61C 8/00, A61B 17/88, B25B 15/04

(54) **Instrument to selectively rotate a medical tool**

(30) Priority: 10.11.2011 IT UD20110179
(71) Applicant: Moro, Sergio, 33084 Cordenons (PN) (IT)
(72) Inventor: Moro, Sergio, 33084 Cordenons (PN) (IT)
(74) Representative: Petraz, Gilberto Luigi

(57) **Abstract**

An instrument to selectively rotate a tool also usable in the medical field comprises an oblong-shaped body, at a first end of which a toothed wheel is mounted rotatable and is provided with coupling means suitable to be coupled in a removable manner with said tool. A ratchet gear mechanism is mounted inside said body and is associated with said toothed wheel. The ratchet gear mechanism is selectable into different operating conditions.

## Description

### FIELD OF THE INVENTION

The present invention concerns an instrument to selectively rotate a tool, even small sized, usable for example in screwing or unscrewing operations, in any field of the state of the art, including the medical field, such as for example dentistry, surgery or implantology of prostheses, both on humans and on animals.

### BACKGROUND OF THE INVENTION

Different instruments are known, such as jacks or ratchet-type spanners and screw drivers, suitable to be temporarily coupled to a small sized tool, only millimeters or at maximum centimeters big, usable in different fields of the state of the art, to be able to screw and unscrew, or simply rotate, depending on needs, a mechanical member, such as for example a screw, a milling cutter, or a cam element, onto another mechanical part or onto a part of the human body, in medicine, or of an animal in veterinary science.

Normally known instruments are able to carry out a single function, or at most two, such as ratchet-type or free wheel spanners, which are provided with a selector to selectively dispose them in the screwing or unscrewing condition.

Moreover, known instruments normally need to be coupled, or used together, with other guide instruments, suitable to keep the tool axial, above all in cases of screwing and/or rotation with moderate moments of torsion. On the contrary, when a bigger moment of torsion needs to be applied, it is necessary to replace the instruments previously used with other instruments with a more extended lever arm, such as for example bigger jacks, spanners with a bigger lever arm, or screwdrivers of different sizes.

Moreover, when it is necessary to apply a determinate and precise moment of torsion, it is necessary to use particular instruments with a dynamometric spanner and which are calibrated on the desired value of moment of torsion.

All the many known instruments, to be associated with a single tool, have the disadvantage that they need a long time to be replaced, which is particularly important in the case of surgical operations; they also have the disadvantage that they take up a lot of space, which space is normally very limited near the zone where the operation is performed. Above all in the medical field, that is, for example in dentistry, surgery and/or prosthesis work, this could cause considerable inconvenience and stress, both to the surgeon operating and to the patient or animal being operated on.

From documents US 2006/243108 A1, DE 20 2007 004198 U1 and US 1944171 A three different instruments are known to selectively rotate a tool, with sizes such as to be held in one hand, but not able to be easily adjusted in the three functions required, that is screwing, unscrewing or free rotation.

Purpose of the present invention is to obtain an instrument for screwing, unscrewing and freely rotating a tool, also usable in the medical field, which allows to carry out a plurality of operations without needing to be replaced by another instrument, in order to increase practicality in use and at the same time to reduce procedure times in the different fields of application as indicated above.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

An instrument to selectively rotate a tool also usable in the medical field, according to the present invention comprises an oblong-shaped body, at a first end of which a toothed wheel is mounted rotatable and is provided with coupling means suitable to be coupled in a removable manner with said tool.

According to a characteristic of the present invention there is a ratchet gear mechanism inside said body which is associated with the toothed wheel, and is manually selectable into one of the following three operating conditions: a first operating condition, in which the toothed wheel is free to rotate in both directions of rotation; a second operating condition, in which the toothed wheel can rotate only in one direction; a third operating condition, in which the toothed wheel can rotate only in the opposite direction to the previous direction. Moreover, a selection knob is rotatable with respect to said body to command the ratchet gear mechanism and position it selectively in one of the three operating conditions.

According to a characteristic of the present invention, the ratchet gear mechanism comprises a pawl element associated with the toothed wheel and suitable to selectively rotate with respect to a pin supported by said body so as to assume three angular positions which correspond to said three operating conditions

According to another characteristic of the present invention, the selection knob is positioned at a second end of said body.

According to another characteristic of the present invention, the three angular positions are defined by three corresponding positioning holes, with each of which a spherical element is suitable to cooperate, constantly thrust by a first spring interposed between the selection knob and the ratchet gear element.

According to another characteristic of the present invention, the instrument also comprises a dynamometric device suitable to regulate the moment of torque transmitted by the toothed wheel to the tool.

According to another characteristic of the present invention, the dynamometric device comprises an elastic element which is made from the body, exploiting the elasticity of the material, or alternatively is mounted coaxially in the body, so that, in both cases, its load is adjustable by means of a nonius mounted rotatable coaxially and outside the body.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a perspective view, right side, of an instrument according to the present invention, shown together with a tool, detached, which can be selectively coupled;
- fig, 2 is a perspective view, left side, of the instrument and the tool in fig. 1, coupled with each other;
- fig. 3 is a front view of the instrument in fig. 1;
- fig. 4 is a back view of the instrument in fig. 1;
- fig. 5 is a left side view of the instrument in fig. 1;
- fig. 6 is a section along the line VI-VI of fig. 5;
- fig. 7 is a section along the line VII-VII of fig. 4;
- fig. 8 is a section along the line VIII-VIII of fig. 3;
- fig. 9 is a section along the line XI-XI of fig. 3;
- fig. 10 is a section along the line X-X of fig. 3;
- fig. 11 is a view from below of the instrument in fig. 1.

### DESCRIPTION OF ONE FORM OF EMBODIMENT OF THE PRESENT INVENTION

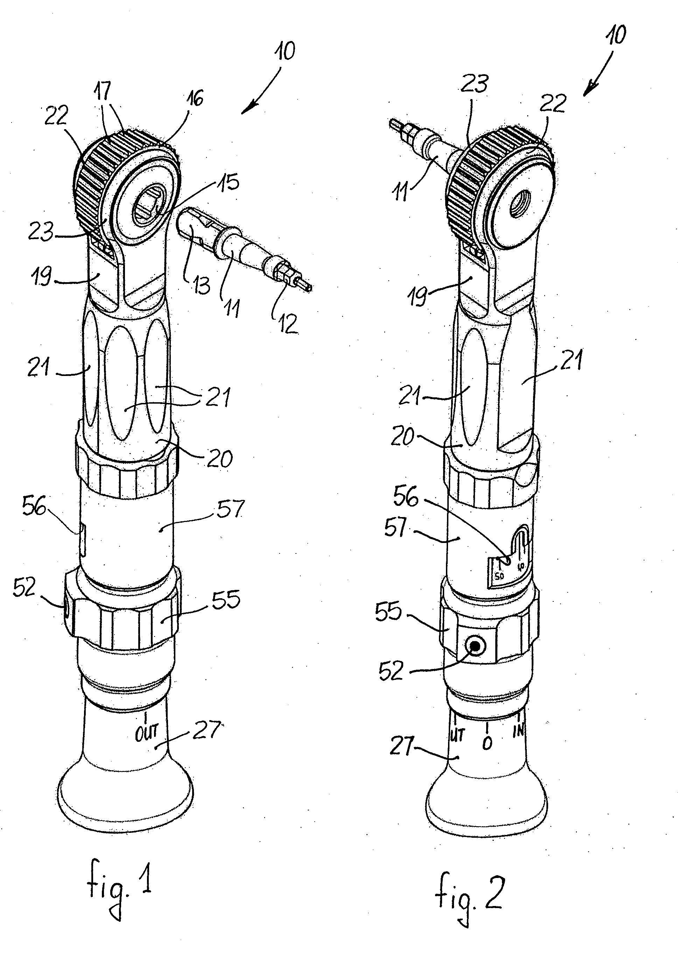

With reference to fig. 1, an instrument 10 according to the present invention is suitable to selectively screw and unscrew a tool 11, also usable in the medical field, as well as in other fields of the state of the art. For example, the tool 11 is a so-called Allen spanner, having a first end 12 with a hexagonal cross section, even very small in size, in the order of a few millimeters, and suitable to cooperate with a corresponding hexagonal cavity of a mechanical member, such as for example the head of a screw, of a known type and not shown in the drawings. For example, in the surgical-dentistry field, the instrument 10 can be coupled to a screwdriver for implants to be used in an appropriate way, for the insertion of a dental implant which can be integrated into a bone in a previously prepared site.

The tool 11 has a second end 13, for example with a substantially square cross section, which is suitable to be inserted with precision, by means of a coupling attachment of the known type, into a corresponding central cavity 15 of a toothed wheel 16, provided with peripheral teeth 17 and mounted rotatable at an upper end 19 of a body 20, substantially tubular, of the instrument 10.

The body 20 is oblong in shape, with sizes such as to be easily held in the palm of one hand, and has a zone near to the upper end 19, provided externally with hollows 21 which make it easy to hold. By way of example, the overall length of the instrument 10 is about 125mm.

More particularly, the toothed wheel 16 is rotatably supported between two shoulders 22 and 23, parallel to each other, of the upper end 19. In this case and merely as an example, the toothed wheel 16 has an external diameter of about 18 mm.

In this way, the user can hold the instrument 10 either with the right hand or with the left hand, and easily drive the toothed wheel 16 with one or two fingers of the same hand, for example the index finger and/or the thumb.

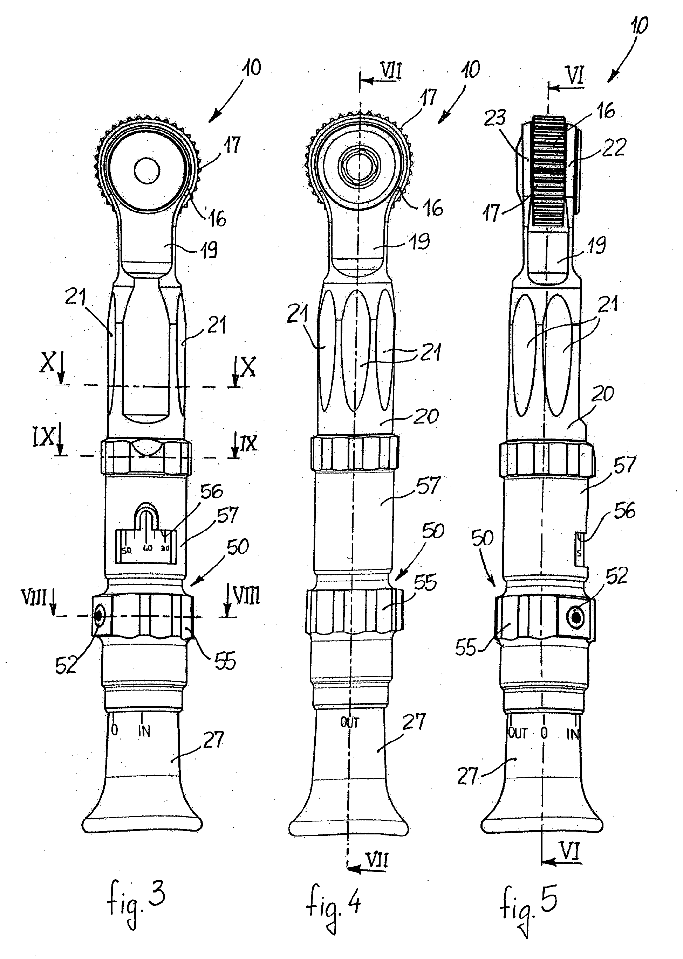

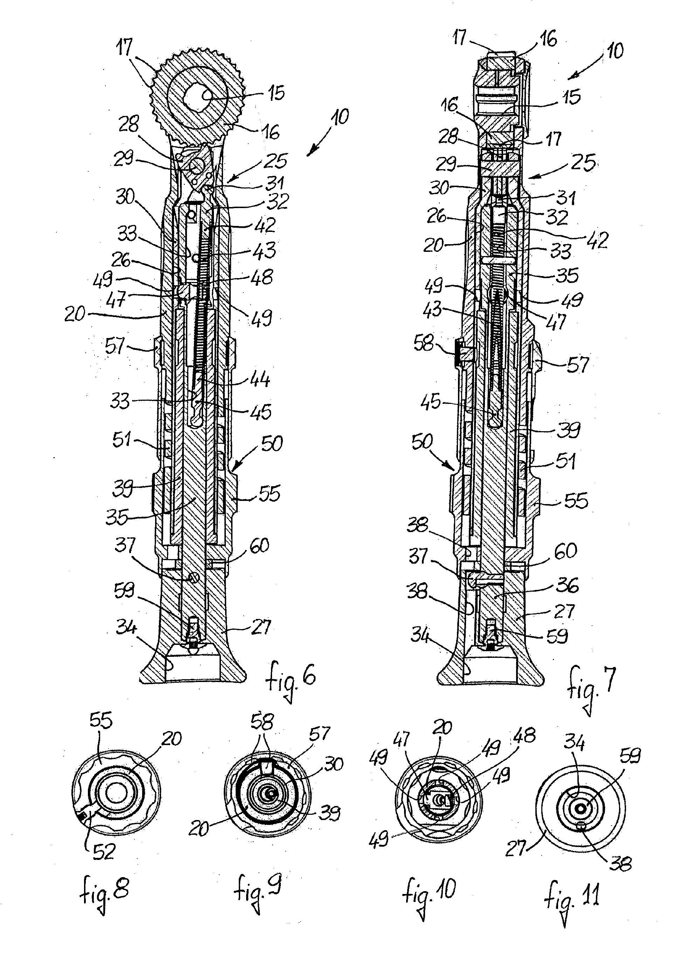

A ratchet gear mechanism 25 (figs. 5 and 6) disposed in an axial cavity 26 of the body 20 is suitable to cooperate with the peripheral teeth 17 of the wheel 16

The ratchet gear mechanism 25 is of the unidirectional type but can be selected manually by means of a knob 27, attached at the lower end 36 by means of an attachment screw 59, as will be described more fully hereafter, in one of the following three operating conditions: a first operating condition, or neutral (N or 0), in which the toothed wheel 16 is free to rotate in both directions of rotation; a second operating condition, or IN condition, in which the toothed wheel 16 can rotate only in one direction, for example clockwise, with respect to the axis of its central cavity 15; and a third operating condition or OUT condition, in which the toothed wheel 16 can rotate only in the direction opposite to the preceding one, for example in an anti-clockwise direction with respect to the axis of its central cavity 15.

In particular, the ratchet gear mechanism 25 comprises a pawl 28, substantially C-shaped, pivoted on a pin 29 disposed transversely on the upper part of an internal core 30, inserted into the cavity 26 of the body 20.

The pawl 28 is connected to the spherical end 31 of an upper rod 32 disposed in an axial cavity 33 of an axial peg 35, with the lower end 36 attached by an elastic pin 37 to the selection knob 27, which is axially rotatable.

In the axial cavity 26 of the body 20, outside the axial peg 35 and coaxial to it, there is a metal tube 39 which acts as a spacer.

The upper rod 32 is connected to an upper and 42 of a helical spring 43,which has the lower end 44 inserted in a lower rod 45 disposed in the bottom of the axial cavity 33.

A bolt with a spherical positioning head 47, centrally holed transversely for the passage of the helical spring 43, is constantly thrust by another spring 48 in the part opposite the spherical part, inside one of three holes 49, among the four made in the core 30 and angularly staggered at about 90° with respect to each other (fig. 10).

Therefore, by selectively rotating the selection knob 27 by about 90° in one direction or the other, it is possible to move the bolt with the spherical head 47 from one of the holes 49 to the adjacent one, to the right or the left, thus causing the pawl 28 to rotate with respect to the pin 29. In particular, the selection knob 27 has a central or neutral position, which corresponds to said condition N or 0, and when it is rotated by about 90° in one direction or in another, it takes the pawl 28 into one of the other two operating conditions (IN or OUT) described above. In figs. 6 and 7 the pawl 28 is shown in one of these two conditions. In each of the three conditions N or 0, IN and OUT, the bolt with the spherical head 47, inserted into the corresponding hole 49, guarantees the stability of the instrument 10, until the selection knob 27 is once again rotated by the user.

The instrument 10 described heretofore is thus already of the multifunctional type, because it allows the user to use it with the possibility of manually rotating the toothed wheel 16 in both directions of rotation, when the selection knob 27 is positioned in the central position N or 0, or to use it as a jack, to screw or unscrew the tool 11, positioning the selection knob 27 in the IN or OUT position respectively.

The instrument 10, in a more complete configuration shown in the attached figs. 1-11, is also provided with a dynamometric mechanism 50, by means of which the user can control or set the value of the moment of torsion applied by the toothed wheel 16 to the tool 11, when the tool 10 is used as a jack.

In this case, the dynamometric mechanism 50 comprises a helical spring 51, disposed axially outside the core 30 containing the metal tube 39. The helical spring 51 has been made by means of helical working on the body 20 and is coupled by means of a radial peg 52, threaded and firmly screwed onto a scaled nonius 55. The latter is mounted coaxially to the body 20 and is provided with notches (figs. 3 and 5) indicative of the value, for example in Ncm, of the moment applied by the instrument 10 to the tool 11, by means of the toothed wheel 16. The notches of the nonius 55 are visible through a suitable window 56 of a selection ring-nut 57, which, when the dynamometric mechanism needs to be used, is only in the front position (fig. 3).

By selectively rotating the nonius 55 with respect to the body 20 it is thus possible to adjust and set the load of the spring 51 and consequently the moment of torsion applied by the instrument 10 to the tool 11.

The selection ring-nut 57 is mounted rotatable with respect to the body 20 and radially supports a clamping peg with a return spring 58 (fig. 9), suitable to selectively and temporarily clamp the core 30 with respect to the body 20, to exclude or activate the dynamometric function of the corresponding dynamometric device 50, with the selection ring-nut rotated by about 90° with respect to its front position, shown in fig. 3.

Between the knob 27 and the ring-nut 55 (figs. 6 and 7) a spacer ring 60 is disposed.

The instrument 10 according to the present invention has been equipped with suitable means to allow easy maintenance with cleaning and lubrication, using a suitable mouth 34 (figs. 6, 7 and 11), disposed in the lower part of the knob 27 and suitable to house the appropriate nozzle for the lubricant spray and/or compressed air, of the known type and not shown in the drawings, such as that in use today for hand-pieces and/or Contra angles for dentistry, or other fields. A pair of internal pipes 38 are in communication with the mouth 34 and are suitable to lead, by means of a sequence of internal cavities, to the exit of the residual parts and the lubricant spray for the cleaning and lubrication of the instrument 10 for the correct functioning and maintenance thereof.

The instrument 10 as described heretofore is therefore innovative because the functions which before were present in different instruments have been incorporated in it, and it is therefore able to give the user the possibility of choice in the use of the desired function.

Indeed, the toothed wheel 16 also acts as a rotating element for a manual grip, with the possibility of being freely driven with the position of the selection knob 27 in position "0".

The selection knob 27 with its rotation into the 0, IN or OUT positions, moves the ratchet gear mechanism 25, which is very different from the state of the art, inside the body 20: it is much smaller in size and has a much more sensitive and precise functioning principle, as well as silent in the operating or ratchet positions, IN and OUT.

Moreover, the grip of the instrument 10 can be maintained even during the change of rotation selection IN and OUT, by the operator during very sensitive and delicate operations, again thanks to the concept of the sophisticated ratchet gear mechanism 25. The latter is new and original with respect to known mechanisms and is different from them in that in the instrument 10 the body 20 remains stationary and axial with respect to the grip in which the operator has oriented the apparatus of the instrument 10 with reference to the wheel 16; inside it the ratchet gear mechanism 25 is hidden and not dangerous so it does not pinch gloves or fingers as happens with known instruments. In fact the ratchet gear mechanism 25 is the satellite type, which means that the operator can have greater sensitivity in use, for example in screwing.

The instrument 10 can be applied not only in dentistry but also in general surgery, in mechanics in general and in componentry engineering in which the rotation right or left is required, or dynamometric control, in limited spaces or compartments.

The dynamometric solution of the instrument 10 provides the rotation of the selection ring-nut 57, which functions as a scaled selector, with the scaled nonius 55 showing the position of the force well defined, and also as a mechanical housing inside it. The operator can quickly change the choice of clamping initially established with a small rotational displacement, finding the selection mechanically on the scaled nonius 55. In fact, a selection rotation is sufficient to choose the pre-established clamping load, from a minimum to a maximum, with a slight rotation of a little more than a quarter of a turn.

It is clear that modifications and/or additions of parts may be made to the instrument 10 as described heretofore, without departing from the field and scope of the present invention.

It is also clear that, although the present invention has been described with reference to a specific example, a person of skill in the art shall certainly be able to achieve many other equivalent forms of instrument 10, having the characteristics as set forth in the claims and hence all coming within the field of protection defined thereby.

## Claims

1. Instrument to selectively rotate a tool (11) also usable in the medical field, comprising an oblong-shaped body (20), at a first end (19) of which a toothed wheel (16) is mounted rotatable and is provided with coupling means (15) suitable to be coupled in a removable manner with said tool (11), **characterized in that** a ratchet gear mechanism (25) is mounted inside said body (20) and is associated with said toothed wheel (16), said ratchet gear mechanism (25) being manually selectable into one of the following three operating conditions: a first operating condition (N or 0), in which said toothed wheel (16) is free to rotate in both directions of rotation; a second operating condition (IN), in which said toothed wheel (16) is constrained to rotate only in one direction; a third operating condition (OUT), in which said toothed wheel (16) is constrained to rotate only in the opposite direction to the first direction and **in that** a selection knob (27) is rotatable to said body (20) to command said ratchet gear mechanism (25) and position it selectively in one of said three operating conditions.

2. Instrument as in claim 1, **characterized in that** said ratchet gear mechanism (25) comprises a pawl element (28) associated with said toothed wheel (16) and suitable to selectively rotate with respect to a pin (29) supported by said body (20) so as to assume three angular positions which correspond to said three operating conditions (N or 0, IN, OUT).

3. Instrument as in claim 2, **characterized in that** said selection knob (27) is positioned at a second end of said body (20) opposite said first end (19).

4. Instrument as in claim 3, **characterized in that** said three angular positions are defined by three corresponding positioning holes (49), with each of which a bolt with a spherical head (47) is suitable to cooperate, thrust constantly by a spring (48) and interposed between said selection knob (27) and said pawl element (28).

5. Instrument as in claim 3 or 4, **characterized in that** it also comprises a mouth (34) and pipes (38) disposed in said knob (27) and suitable to facilitate maintenance, with cleaning and lubrication of the inner part of said instrument (10).

6. Instrument to selectively rotate a tool (11) also usable in the medical field, comprising an oblong-shaped body (20), at a first end (19) of which a toothed wheel (16) is mounted rotatable and is provided with coupling means (15) suitable to be coupled in a removable manner with said tool (11), **characterized in that** it also comprises a dynamometric device (50) suitable to regulate the moment of torque transmitted by said toothed wheel (16) to said tool (11).

7. Instrument as in claim 6, **characterized in that** said dynamometric device (50) comprises an elastic element (51) whose load is adjustable by means of a nonius (55) mounted rotatable coaxially with said body (20).

8. Instrument as in claim 7, **characterized in that** said nonius (55) is coaxial and adjacent to said selection knob (27) mounted on said body (20).

9. Instrument as in claim 6, 7 or 8, **characterized in that** a selection ring-nut (57) is mounted rotatable with respect to said body (20) so as exclude, or activate, the function of said dynamometric device (50).

10. Instrument as in claim 9, **characterized in that** said selection ring-nut (57) radially supports a clamping peg with a return spring (58) so as to selectively exclude or activate the dynamometric function of said dynamometric device (50).
